# FASCICULE DE BREVET EUROPEEN

(11) **EP 3 665 571 B1**
(45) Date de publication et mention de la délivrance du brevet: **29.11.2023**
(21) Numéro de dépôt: 18801016.9
(22) Date de dépôt: 08.10.2018
(51) Int. Cl.: G06F 9/48

(54) **PROCÉDÉ D'EXÉCUTION DE PLANS DE SÉQUENCEMENT ASSURANT UNE COMMUNICATION À FAIBLE LATENCE ENTRE TÂCHES TEMPS-RÉEL**
VERFAHREN ZUR AUSFÜHRUNG VON SEQUENZIERUNGSPLÄNEN ZUR SICHERSTELLUNG DER NIEDRIGLATENTEN KOMMUNIKATION ZWISCHEN AUFGABEN IN ECHTZEIT
METHOD FOR EXECUTING SEQUENCING PLANS ENSURING LOW-LATENCY COMMUNICATION BETWEEN TASKS IN REAL TIME

(30) Priorité: 10.10.2017 FR 1759487
(43) Date de publication de la demande: 17.06.2020
(73) Titulaire: KRONO-SAFE, 91300 Massy (FR)
(72) Inventeur: BARBOT, Adrien, 71701 Schwieberdingen (DE); DAVID, Vincent, 91460 Marcoussis (FR); OHAYON, Emmanuel, 91400 Orsay (FR)
(74) Mandataire: de Jong, Jean Jacques
(86) Numéro de dépôt international: PCT/FR2018/052476
(87) Numéro de publication internationale: WO 2019/073156

(56) Documents cités:
- EP-A2- 1 519 269
- FR-A1- 2 965 947
- FR-A1- 3 004 274
- FR-A1- 3 015 067

## Description

### Domaine technique de l'invention

L'invention est relative aux systèmes multitâches temps-réel critiques, et plus spécifiquement aux techniques de communication inter-tâches dans un tel système.

### Arrière-plan de l'invention

Dans les systèmes temps-réel critiques, c'est-à-dire qui ne peuvent tolérer aucune violation d'échéance par une mise en retard de l'exécution d'une opération, les tâches sont souvent exécutées selon des méthodes d'ordonnancement statique. On construit alors hors-ligne un plan de séquencement statique représentant une allocation temporelle statique du besoin d'utilisation des ressources d'exécution. Une telle approche est décrite, par exemple, dans l'article ["A Method and a Technique to Model and Ensure Timeliness in Safety Critical Real-Time Systems", C. Aussaguès, V. David, Fourth IEEE International Conférence on Engineering of Complex Computer Systems, 1998], et dans les demandes de brevet WO2006-050967 et US2010-0199280.

Un plan de séquencement statique peut inclure plusieurs tâches parallèles à exécuter en temps partagé sur une unité d'exécution. Les tâches peuvent en outre communiquer entre elles. Par exemple, une première tâche peut se charger de relever régulièrement les mesures produites par un capteur, tandis qu'une deuxième tâche peut échantillonner les mesures produites pour mettre en oeuvre une régulation.

Dans une telle configuration, des latences peuvent naître entre le moment où une donnée est fournie par une tâche productrice et le moment où la donnée est lue par une tâche consommatrice. Dans certaines situations, les latences peuvent être si importantes qu'elles nuisent à la stabilité ou à la réactivité d'un système de régulation exploitant les données produites.

### Résumé de l'invention

On prévoit de façon générale un procédé de construction hors-ligne d'un plan de séquencement de plusieurs tâches à exécuter sur un système temps-réel, comprenant des étapes consistant à décomposer chaque tâche en une séquence de trames, où chaque trame est associée à un traitement élémentaire ayant un besoin d'exécution, et définit une date de début à partir duquel le traitement peut démarrer et une date de fin, ou échéance, à laquelle le traitement doit être terminé ; associer des contraintes d'ordre respectives à des couples de traitements ; projeter les dates sur une échelle de temps associée à une unité d'exécution du système temps-réel, formant ainsi une suite de créneaux temporels ; parcourir séquentiellement les créneaux temporels de la suite ; identifier des traitements éligibles dans un créneau temporel courant, un traitement étant éligible s'il respecte les deux critères suivants : i) il est exécutable dans le créneau courant, et ii) s'il possède une contrainte d'ordre, le traitement référencé par la contrainte d'ordre est également exécutable dans le créneau courant, ou l'échéance du traitement référencé est située dans un créneau précédent ; trier les traitements éligibles dans une liste par ordre d'échéances croissantes ; modifier la liste pour réordonner les traitements selon leurs contraintes d'ordre ; et répartir les besoins d'exécution des traitements éligibles dans le créneau temporel courant dans l'ordre de la liste pour construire le plan de séquencement.

Le procédé peut comprendre une étape initiale de suppression des contraintes d'ordre dans chaque couple qui est formé de deux traitements dont les trames ne se chevauchent pas.

L'étape de modification de la liste et l'étape de répartition des besoins peuvent inclure des étapes consistant à parcourir séquentiellement les traitements de la liste ; si le traitement courant de la liste possède une contrainte d'ordre référençant un traitement placé après le traitement courant dans la liste, modifier la liste en plaçant le traitement référencé devant le traitement courant ; réitérer le parcours de la liste en démarrant à la position du traitement référencé repositionné ; sinon placer le besoin du traitement courant dans le créneau courant.

L'étape de placement du besoin peut comprendre des étapes consistant à placer l'intégralité du besoin dans le créneau courant si le créneau dispose de suffisamment de place pour le contenir ; sinon combler le créneau courant avec une première partie du besoin et reporter le placement du reliquat à un créneau ultérieur.

Le système temps-réel peut comprendre plusieurs unités d'exécution. Alors, le procédé peut en outre comprendre des étapes consistant à associer à chaque unité d'exécution une copie de la suite de créneaux temporels pour former un plan de séquencement pour chaque unité d'exécution ; allouer les unités d'exécution aux tâches de manière que des traitements liés par des contraintes d'ordre soient exécutés sur des unités d'exécution différentes ; à l'étape de placement du besoin : i) placer le besoin dans le créneau courant de la suite associée au traitement courant, et ii) placer dans le créneau courant de la suite associée au traitement référencé un intervalle de remplissage correspondant au besoin placé augmenté d'un temps de synchronisation tenant compte de délais survenant dans la communication d'une donnée entre deux unités d'exécution et d'un décalage entre les horloges des deux unités d'exécution.

L'étape de placement du besoin dans le créneau courant peut consister à placer le besoin dans tout intervalle de remplissage contenu dans le créneau courant.

On prévoit également un procédé d'exécution de tâches dans un système multitâche temps-réel, comprenant des étapes consistant à produire un plan de séquencement de plusieurs tâches selon le procédé susmentionné ; configurer une unité d'exécution du système multitâche temps-réel pour appliquer le plan de séquencement dans une boucle ; configurer une base de temps du système multitâche temps-réel pour cadencer les créneaux temporels du plan de séquencement ; lancer séquentiellement les traitements éligibles de chaque créneau selon l'ordre de répartition des besoins d'exécution correspondants dans le créneau ; et contrôler la conformité des durées d'exécution des traitements avec les besoins d'exécution correspondants.

### Description sommaire des dessins

Des modes de réalisation seront exposés dans la description suivante, faite à titre non limitatif en relation avec les figures jointes parmi lesquelles :
- les figures 1A et 1B illustrent un exemple de deux tâches pouvant communiquer, selon un format dénommé séquence de trames ;
- les figures 2A et 2B représentent deux possibilités de construction d'un plan de séquencement à partir des tâches de la figure 1B ;
- les figures 3A et 3B illustrent un groupe de séquences de trames représentant un exemple de trois tâches communicantes, et un plan de séquencement correspondant, construit à l'aide d'un procédé permettant de réduire, voire annuler la latence de communication ;
- les figures 4A et 4B illustrent un couple de séquences de trames représentant un exemple de deux tâches communicantes, et un plan de séquencement correspondant, construit à l'aide d'une variante de procédé permettant de réduire la latence de communication ; et
- les figures 5A et 5B illustrent un couple de séquences de trames représentant un exemple de deux tâches communicantes, et deux plans de séquencement correspondants, construits respectivement pour deux unités d'exécution à l'aide d'un procédé permettant de réduire, voire annuler la latence de communication.

### Description d'un mode de réalisation de l'invention

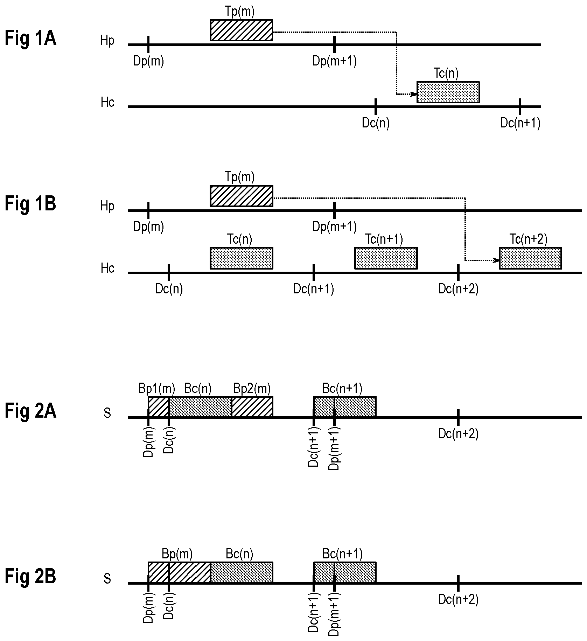

La figure 1A illustre un exemple de tâche Tp qui produit des données et un exemple de tâche Tc qui consomme les données, tâches que l'on souhaite exécuter en parallèle sur un système temps-réel. Chaque tâche peut être formalisée comme le propose la demande de brevet US2017-0004011 déposée par Krono-Safe. Alors, chaque tâche est découpée en une séquence répétitive de trames, chaque trame étant associée à un traitement élémentaire Tp(m), Tc(n) (où m et n sont des numéros de séquence des traitements). Les frontières de la trame sont définies par des points de synchronisation ou dates Dp, De qui forment les contraintes temporelles du traitement. Chaque traitement peut démarrer dès le premier point de synchronisation, ou date de début, et doit terminer au plus tard au deuxième point de synchronisation, ou échéance.

Les points de synchronisation sont choisis selon une base de temps Hp, Hc qui cadence le système temps-réel pendant l'exécution. Ils sont souvent périodiques ou groupés dans des séquences périodiques.

Chaque traitement a en outre un besoin d'exécution, ci-après noté B, qui peut être formalisé par un intervalle de temps inférieur à la longueur de la trame correspondante, qui est par exemple un temps d'exécution pire-cas (ou WCET - « Worst-Case Execution Time »). Le besoin d'exécution peut être utilisé de façon quelconque dans la trame, en un seul morceau ou en plusieurs segments disjoints, selon les contraintes mises en oeuvre lors d'une phase ultérieure de construction d'un plan de séquencement statique.

Pour établir une communication inter-tâches, des traitements individuels de la tâche Tp peuvent être conçus pour produire des données destinées à des traitements de la tâche Tc. Ici le traitement Tp(m) produit une donnée pour le traitement Tc(n). La donnée est échangée par l'intermédiaire d'une mémoire partagée, par exemple. Ainsi, la fin du traitement Tp(m) est généralement conçue pour écrire la donnée dans la mémoire partagée, et le début du traitement Tc(n) est conçu pour lire la donnée dans la mémoire partagée.

Dans l'exemple de la figure 1A, la date de début Dc(n) du traitement Tc(n) est située après l'échéance Dp(m+1) du traitement Tp(m). Cela signifie que le traitement Tc(n) pourra toujours consommer la donnée produite par le traitement Tp(m), mais cela avec une latence supérieure à Dc(n) - Dp(m+1).

Dans l'exemple de la figure 1B, la date de début Dc(n) du traitement Tc(n) est située avant l'échéance Dp(m+1) du traitement Tp(m). Cela signifie qu'on ne peut pas garantir dans tous les cas que le traitement Tc(n) puisse consommer la donnée produite par le traitement Tp(m). De plus, la date de début Dc(n+1) du traitement Tc(n+1) est également située avant l'échéance Dp(m+1). Dans ce cas, le premier traitement qui peut consommer la donnée de manière fiable est Tc(n+2), avec une latence supérieure à Dc(n+2) - Dp(m+1).

La figure 2A illustre un segment de plan de séquencement statique qui pourrait être généré de manière automatisée par un outil de développement à partir des séquences de trames des tâches Tp et Tc telles qu'illustrées à la figure 1B.

Un tel outil peut être conçu pour projeter sur une échelle de temps S les points de synchronisation de toutes les tâches, créant une suite de créneaux temporels consécutifs. Si le système temps-réel comprend plusieurs coeurs de processeur ou unités d'exécution, l'outil produira une projection de points de synchronisation distincte pour chaque unité d'exécution. L'outil traite ces créneaux en séquence pour y répartir les besoins des traitements de manière à satisfaire les contraintes temporelles, si cela est possible - dans certains cas, l'outil pourrait ne pas trouver de solution, signifiant que le développeur serait amené à effectuer une nouvelle itération, par exemple après avoir diminué le nombre de tâches parallèles ou relâché des contraintes.

Plus spécifiquement, à chaque créneau observé, l'outil établit la liste des traitements qui sont éligibles pour être exécutés dans le créneau, c'est-à-dire chaque traitement qui peut démarrer ou continuer dans le créneau observé. Un traitement qui peut « continuer » dans le créneau observé est en fait un reliquat d'un traitement qui a été démarré à un créneau précédent. En effet, une trame peut chevaucher plusieurs créneaux - dans ce cas, le besoin d'exécution du traitement correspondant peut être réparti par morceaux dans les créneaux chevauchés. A l'exécution, le morcèlement résulte en des arrêts et reprises du processus correspondant, par préemption du système d'exploitation, chaque arrêt et reprise coûtant un forfait temporel pour sauvegarder et restaurer le contexte d'exécution du processus. Le morcèlement étant effectué statiquement, on peut déterminer un majorant du forfait qui pourra être ajouté au besoin d'exécution pour vérifier le respect des contraintes temporelles.

Pour les traitements éligibles, l'outil répartit les besoins d'exécution selon un ordre donné dans le créneau - de préférence selon l'ordre croissant des échéances. Si les échéances sont identiques, ce qui arrive régulièrement lorsque les points de synchronisation sont périodiques ou harmoniques, les besoins d'exécution peuvent être répartis selon un ordre arbitraire, par exemple par ordre alphabétique des identifiants des traitements.

Dans la figure 2A, le seul traitement éligible dans le créneau [Dp(m), Dc(n)] est Tp(m). Ce créneau est comblé par une première partie Bp1(m) du besoin du traitement Tp(m). Dans le créneau suivant [Dc(n), Dc(n+1)], sont éligibles les traitements Tc(n) et Tp(m). L'ordre des échéances implique que le besoin Bc(n) du traitement Tc(n) soit placé en premier, suivi du reliquat Bp2(m) du besoin du traitement Tp(m).

Ce plan de séquencement, qui pourrait être obtenu en utilisant l'ensemble des paramètres et contraintes classiquement disponibles, montre que la donnée produite par le traitement Tp(m) ne pourrait pas être consommée par le traitement Tc(n), ce qui a mené aux choix illustrés aux figures 1A et 1B pour les traitements consommateurs.

La figure 2B illustre cependant un plan de séquencement compatible avec les tâches de la figure 1B, où le traitement Tc(n) pourrait consommer la donnée produite par le traitement Tp(m), et cela sans latence. Il suffit pour cela, dans cet exemple, de placer le reliquat Bp2(m) devant le besoin Bc(n), comme cela est illustré.

(On notera que les exemples illustrés jusqu'à présent sont des cas d'école élaborés dans un but de clarification. Les cas des figures 2A et 2B, comparant un résultat obtenu par une méthode donnée à un résultat souhaitable, mettent en lumière une solution qui pourrait sembler triviale. Il faut cependant mitiger ce constat par le fait qu'on souhaite que la solution fonctionne de façon générale et automatisée dans une situation pratique, où un plan de séquencement est généré pour de nombreuses tâches parallèles, pouvant chacune avoir de nombreux traitements et de nombreuses interdépendances de communication.)

On propose ci-après une méthodologie permettant de tendre vers des plans de séquencement à « latence nulle » du type de la figure 2B, en introduisant des contraintes d'ordre C entre des traitements choisis par le développeur. Ainsi, un traitement formalisé par une trame (une date de début, une échéance, et un besoin d'exécution), peut être caractérisé en outre par une contrainte d'ordre référençant un autre traitement.

Pour que le procédé soit utile en pratique, les trames des deux traitements liés par une telle contrainte d'ordre se chevauchent, c'est à dire qu'il existe un intervalle de temps commun où les deux traitements liés sont exécutables simultanément. Il en résulte que les deux traitements liés sont pris dans deux tâches distinctes (par exemple les traitements Tp(m) et Tc(n) ou Tc(n+1) à la figure 1B). Sans cela, la contrainte d'ordre serait satisfaite systématiquement par les contraintes temporelles, et serait redondante (cas de la figure 1A, par exemple).

Les deux traitements du couple ainsi formé sont caractérisés par des contraintes d'ordre réciproques, une contrainte d'antériorité pour l'un, et une contrainte de postériorité pour l'autre. La contrainte d'antériorité impose que le traitement correspondant soit complété avant le démarrage du traitement référencé, tandis que la contrainte de postériorité impose que le traitement correspondant démarre après la fin du traitement référencé. Selon un mode de réalisation, un même traitement peut faire l'objet de plusieurs contraintes d'ordre, ce qui permet de construire des chaînes de dépendances entre traitements, et de façon générale un arbre de dépendances.

Les contraintes de postériorité et d'antériorité d'un couple de traitements sont réciproques - on peut ainsi n'exploiter qu'une seule de ces contraintes réciproques pour construire un plan de séquencement. Dans la suite de la description, on exploite seulement la contrainte de postériorité. Il en résulte que, dans chaque couple de traitements liés, un seul des traitements possède une contrainte de postériorité, et l'autre traitement peut être considéré comme ne possédant pas de contrainte. (Selon une variante équivalente, on pourrait n'exploiter que la contrainte d'antériorité.)

L'outil de développement est alors conçu pour tenir compte de ces nouvelles contraintes pour construire un plan de séquencement statique intégrant toutes les tâches. Plus spécifiquement, l'outil peut mettre en oeuvre les étapes suivantes sur un groupe de tâches parallèles définies par des séquences de trames et un ensemble de contraintes de postériorité :
1. Les dates correspondant aux points de synchronisation des tâches sont projetées sur une même échelle de temps S afin d'obtenir une suite de créneaux temporels. La suite de créneaux temporels forme le squelette du plan de séquencement.
2. On parcourt séquentiellement les créneaux temporels, et on considère le créneau temporel courant.
3. On identifie la liste des traitements éligibles sur le créneau courant, c'est-à-dire l'ensemble des traitements qui respectent les deux critères suivants :
   3.1. Le traitement est exécutable, c'est-à-dire que le créneau courant est inclus entre les dates de début et de fin du traitement ; et
   3.2. Si le traitement possède une contrainte de postériorité C, le traitement référencé par cette contrainte est également exécutable (figure 1B, intervalle [Dc(n), Dc(n+1)], en supposant que Tc(n) référence Tp(m)), ou bien l'échéance du traitement référencé est située dans un créneau précédent (figure 1A).
      Ce critère élimine tout traitement consommant une donnée qui ne peut être disponible dans le créneau courant.
      Dans un mode de réalisation où on autorise des chaînes de dépendances entre traitements, ce critère peut mener à un parcours de l'arbre de dépendances pour déterminer que tous les traitements de l'arbre sont exécutables. Alors si un seul des traitements de l'arbre n'est pas exécutable, l'arbre entier est éliminé des traitements éligibles.
4. Les traitements éligibles sont triés dans l'ordre croissant des échéances et placés dans une liste triée. Cette liste fournit un point de départ pour déterminer l'ordre de placement des besoins d'exécution correspondants dans le créneau courant du plan de séquencement.
   La liste est susceptible de contenir des couples de traitements liés par des contraintes d'ordre, et il n'est pas garanti que les traitements de chaque couple soient placés dans le bon ordre (producteur-consommateur). Les étapes suivantes visent à réordonner la liste pour que chaque traitement consommateur soit placé après son traitement producteur respectif.
5. On parcourt séquentiellement la liste triée, et on considère le traitement courant de la liste.
   5.1. Si le traitement courant ne possède pas de contrainte de postériorité, alors on place le besoin correspondant à ce traitement dans le créneau courant. Ce besoin peut être le reliquat d'un créneau précédent. Le reliquat peut être nul, signifiant qu'on a pu terminer le placement du besoin dans un créneau précédent. Si le besoin ne peut être entièrement placé dans le créneau courant, on complète le créneau courant avec une première partie du besoin, et le reliquat est conservé pour le créneau suivant. Le processus est réitéré à l'étape 5.
      Il est possible dans certaines situations, à cette étape, que la fin du créneau courant soit l'échéance du traitement courant, et que le créneau ne puisse pas contenir le besoin. Les tâches telles qu'elles ont été définies ne sont alors pas exécutables en parallèle sur le système temps-réel envisagé, et le développeur peut être amené à reconcevoir les tâches.
      Les besoins sont de préférence placés de manière jointive depuis le début du créneau, afin de laisser la plus grande place disponible à la fin du créneau.
   5.2. Si le traitement courant possède une contrainte de postériorité :
      5.2.1. Si le traitement référencé est placé devant le traitement courant dans la liste, l'ordre de la liste est correct. On procède avec le besoin du traitement courant comme dans l'étape 5.1, et le processus est réitéré à l'étape 5.
         Selon la situation, il est possible que les deux traitements liés se trouvent séparés par un autre traitement dans la liste. Dans ce cas particulier, la latence de communication ne sera pas nulle, mais elle sera notablement plus faible que si les deux traitements étaient exécutables dans des créneaux différents.
      5.2.2. Si le traitement référencé est placé après le traitement courant dans la liste, la liste est modifiée en plaçant le traitement référencé devant le traitement courant, de préférence immédiatement devant pour obtenir une communication à latence nulle. Le processus est réitéré à l'étape 5 en reprenant la liste à la même position, qui contient maintenant le traitement qui vient d'être repositionné.
         Dans le cas d'une chaîne de dépendances, le traitement repositionné pourrait également avoir une contrainte de postériorité, auquel cas il peut survenir une nouvelle modification de la liste à la réitération de l'étape 5.2.
6. Le processus est réitéré à l'étape 2 pour le créneau temporel suivant.

Le procédé peut inclure une étape initiale pour supprimer les contraintes d'ordre redondantes, à savoir celles qui sont forcément respectées par la configuration des points de synchronisation. De telles contraintes apparaissent systématiquement dans des traitements dont les trames ne se chevauchent pas.

Le procédé est applicable à une séquence infinie de trames. Bien entendu, dans un cas pratique, chaque tâche est définie par une séquence finie de traitements, notamment une séquence répétitive. La combinaison de plusieurs tâches dans un plan de séquencement produit alors naturellement un plan de séquencement répétitif dont la période est le plus petit commun multiple des périodes des séquences répétitives composant les tâches individuelles, mais il est également possible de produire un plan de séquencement répétitif de longueur arbitraire. Dans l'un ou l'autre cas, on peut quitter les itérations du procédé lorsque la répétition du plan de séquencement est détectée.

Un plan de séquencement ainsi élaboré sert à configurer le système multitâche temps réel pour contraindre l'exécution des tâches. Plus spécifiquement, l'unité d'exécution est configurée pour appliquer dans une boucle infinie le plan de séquencement. La base de temps du système est paramétrée pour produire des points de synchronisation cadençant les créneaux temporels. Dans chaque créneau, l'unité d'exécution lance (ou reprend) les traitements séquentiellement selon le placement des besoins dans le créneau. Un chien de garde contrôle la conformité des durées d'exécution des traitements avec les besoins correspondants.

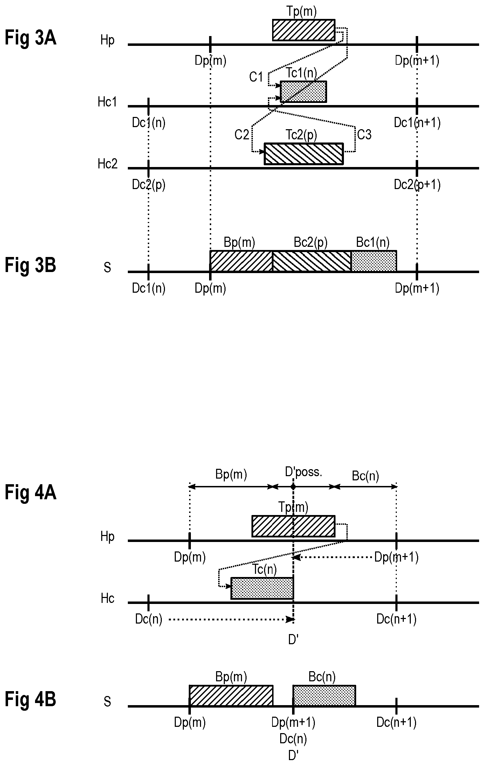

La figure 3A servira à illustrer une mise en oeuvre du procédé ci-dessus à l'aide d'un exemple relativement complexe. Dans cet exemple, une tâche Tp produit des données consommées par deux autres tâches Tc1 et Tc2. La donnée est produite par un traitement Tp(m) associé à une trame ayant une date de début Dp(m) et une échéance Dp(m+1). Cette donnée est consommée par deux traitements respectifs Tc1(n), Tc2(p) des deux tâches Tc1 et Tc2, ce qui est formalisé par des contraintes de postériorité C1 et C2. En outre, le traitement Tc1(n) consomme une donnée produite par le traitement Tc2(p), ce qui est formalisé par une contrainte de postériorité C3. Les traitements Tc1(n) et Tc2(p) sont associés à deux trames de même longueur et ayant la même échéance Dc1(n+1), Dc2(p+1) que le traitement Tp(m). Les dates de début Dc1(n), Dc2(p) des traitements Tc1(n) et Tc2(p) son égales et antérieures à la date de début du traitement Tp(m).

La figure 3B illustre un plan de séquencement résultant de l'application des étapes susmentionnées.

A l'étape 1, les dates des différentes tâches sont projetées sur une échelle S. Parmi plusieurs dates égales, on ne note que la première.

A une première itération de l'étape 2, on observe le créneau [Dc1(n), Dp(m)].

A l'étape 3, aucun traitement n'est retenu comme éligible. En effet, bien que les traitements Tc1(n) et Tc2(p) soient exécutables, ils sont liés par une contrainte de postériorité C1, C2 au traitement Tp(m), qui n'est pas exécutable dans le créneau courant. Comme l'illustre la figure 3B, le créneau reste vide.

L'étape 2 est réitérée pour observer le créneau [Dp(m), Dp(m+1)].

A l'étape 3, les trois traitements sont exécutables selon le critère 3.1. Ils sont en outre éligibles selon le critère 3.2, car ils n'ont pas de contrainte de postériorité référençant un traitement non-exécutable.

A l'étape 4, les traitements sont placés dans une liste, normalement triée par ordre d'échéances croissantes. Les échéances étant identiques, les traitements sont triés dans un ordre arbitraire, par exemple dans l'ordre alphabétique de leurs identifiants. La liste serait alors {Tc1(n), Tc2(p), Tp(m)}. Cet ordre est incorrect et sera corrigé dans les étapes suivantes.

A l'étape 5, on considère le premier traitement de la liste, Tc1(n). Ce traitement possédant une contrainte de postériorité C1 « après Tp(m) », on passe à l'étape 5.2. Le test 5.2.1 échoue, et on passe à l'étape 5.2.2. Il en résulte que le traitement Tp(m) est placé devant le traitement Tc1(n), fournissant la liste {Tp(m), Tc1(n), Tc2(p)}.

On revient à l'étape 5 pour observer la même position dans la liste, contenant maintenant le traitement Tp(m). Le test de l'étape 5.1 est franchi car le traitement Tp(m) ne possède pas de contrainte de postériorité. Le besoin Bp(m) de ce traitement peut être placé en intégralité au début du créneau courant, comme l'illustre la figure 3B.

On réitère l'étape 5 pour considérer le traitement suivant de la liste, Tc1(n). Ce traitement possède une contrainte de postériorité C2 « après Tc2(p) », traitement qui n'a pas encore été considéré. Le traitement Tc2(p) est placé devant le traitement Tc1(n) à l'étape 5.2.2, produisant la liste {Tp(m), Tc2(p), Tc1(n)}.

L'étape 5 est réitérée pour considérer le traitement Tc2(p) dans cette liste modifiée. Ce traitement franchit le test de l'étape 5.2.1, et le besoin Bc2(p) peut être placé en intégralité dans le créneau courant, comme l'illustre la figure 3B.

L'étape 5 est réitérée une dernière fois pour le traitement Tc1(n). Ce traitement franchit cette fois le test de l'étape 5.2.1, et le besoin Bc1(n) peut être placé en intégralité dans le créneau courant, comme l'illustre la figure 3B.

Si on applique le procédé à l'exemple de la figure 1B, en supposant que le traitement Tc(n) soit contraint pour consommer la donnée produite par le traitement Tp(m), on parvient au plan de séquencement à latence nulle de la figure 2B.

Les figures 4A et 4B illustrent une variante de technique pouvant fournir un plan de séquencement prenant en compte des contraintes d'ordre.

Dans la figure 4A on considère un traitement producteur Tp(m) et un traitement consommateur Tc(n) dans les mêmes conditions que les deux premières tâches de la figure 3A. Selon cette variante, on cherche à placer un point de synchronisation intermédiaire D' associé à la contrainte d'ordre entre les deux traitements. Ce point D' est destiné à remplacer l'échéance Dp(m+1) du traitement producteur et la date de début Dc(n) du traitement consommateur. Comme cela est illustré, ce point de synchronisation peut être placé arbitrairement dans une plage de dates D'poss allant de Dp(m) + Bp(m) à Dc(n+1) - Bc(n).

A la figure 4B, les points de synchronisation peuvent être projetés sur une échelle de temps S, mais on décale la date de début Dc(n) du traitement consommateur et l'échéance Dp(m+1) du traitement producteur sur le même point intermédiaire D'. Les créneaux résultants peuvent alors être traités en séquence de manière habituelle sans tenir compte désormais des contraintes d'ordre, ce qui fournirait le plan de séquencement illustré à la figure 4B. On observe, avec l'exemple pris pour la position du point D', vers le centre de sa plage de variation, que la latence entre les traitements Tp(m) et Tc(n) est faible mais non-nulle.

Pour exécuter un tel plan de séquencement, le système temps-réel pourrait être pourvu d'une base de temps additionnelle pour matérialiser les points de synchronisation intermédiaires D', qui seraient alors choisis de manière statique parmi plusieurs valeurs discrètes par l'outil de développement ou le développeur. Une telle procédure pourrait cependant trop réduire le nombre de possibilités pour ordonnancer des tâches parallèles. Par exemple, si le point D' était placé au début de sa plage de variation, on tendrait vers une latence nulle, mais le besoin Bp(m) n'aurait plus aucune marge de placement.

En fait, le point D' peut être utilisé de manière temporaire en deux phases. Dans une première phase, pour la projection des points de synchronisation sur l'échelle S, il est placé à la fin de sa plage de variation. Cela laisse la plus grande liberté possible pour placer le besoin Bp(m) lors de la phase de répartition des besoins. Après avoir placé le besoin Bp(m) dans son créneau [Dp(m), D'], le point D' est supprimé de l'échelle, résultant dans la fusion des créneaux [Dp(m), D'] et [D', Dc(n+1)] pour la suite des opérations. Cela augmente les degrés de liberté pour placer le besoin Bc(n) et ne nécessite plus l'utilisation d'une base de temps adaptée dans le système temps-réel.

Cette procédure est alors équivalente à la procédure en six étapes décrite plus haut. Avec cette variante, la probabilité d'obtenir des communications à latence nulle est plus faible, mais toutefois meilleure que si on n'utilisait pas de contraintes d'ordre.

Dans ce qui précède, on a supposé que le plan de séquencement statique était construit pour une seule unité d'exécution, ou un processeur mono-coeur. Le procédé peut être étendu à un processeur multi-coeur. Dans ce cas, la suite de créneaux temporels définie par l'échelle de temps S est dupliquée pour chaque unité d'exécution, et on cherche à répartir les besoins de l'ensemble des tâches dans les multiples suites pour construire un plan de séquencement pour chaque unité d'exécution. Les suites résultantes de créneaux sont alignées sur les bases de temps ou horloges respectives des unités d'exécution. Pour des raisons de clarté, on suppose dans les figures que les horloges sont identiques. En réalité, les horloges peuvent dériver les unes par rapport aux autres, et le décalage résultant entre les horloges peut être pris en compte par un temps de synchronisation t_{sync}, explicité plus loin.

En pratique, chaque tâche est allouée statiquement à une même unité d'exécution. Si deux tâches interdépendantes sont ainsi allouées à une même unité d'exécution, les enseignements décrits plus haut s'appliquent tels quels.

Cependant, des tâches interdépendantes peuvent être allouées à plusieurs unités d'exécution différentes. Dans ce cas le processus est complété comme suit.

Toute allusion au placement d'un besoin dans « le créneau courant » se réfère au créneau de la suite associée à l'unité d'exécution allouée à la tâche. En d'autres termes, tous les créneaux correspondant à un même créneau de l'échelle S sont « courants » en même temps, un créneau courant pour chaque unité d'exécution.

La liste de traitements élaborée à l'étape 3 contient tous les traitements, indépendamment des unités d'exécution allouées

L'étape 5.2.1 ci-dessus est récrite comme suit (la partie entre crochets [] a été ajoutée par rapport à l'étape originale) :
5.2.1. Si le traitement référencé précède le traitement courant dans la liste, l'ordre de la liste est correct.
[Si le traitement référencé est alloué à une unité d'exécution différente, on place dans le créneau courant un intervalle de remplissage t_{pad}. Cet intervalle de remplissage correspond au besoin du traitement référencé, ou à son reliquat, tel que placé dans le créneau courant associé à l'autre unité d'exécution, augmenté du temps de synchronisation t_{sync} susmentionné. Le temps de synchronisation prend en compte le temps nécessaire à une communication entre unités d'exécution et le décalage entre les horloges des unités d'exécution.]
On place ensuite le besoin du traitement courant dans le créneau, le cas échéant avec un report de reliquat, et le processus est réitéré à l'étape 5.

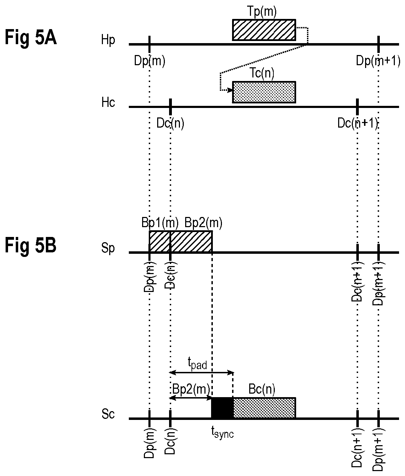

Les figures 5A et 5B illustrent à l'aide d'un exemple le bien-fondé de l'étape ainsi complétée.

La figure 5A est similaire à le figure 1B, où un traitement Tp(m) produit une donnée consommée par un traitement Tc(n). La date de début Dc(n) du traitement Tc(n) est supérieure à la date de début Dp(m) du traitement Tp(m).

La figure 5B illustre deux plans de séquencement Sp et Sc résultants, associés respectivement aux tâches Tp et Te et à deux unités d'exécution différentes.

Dans le plan Sp, on place une première partie Bp1(m) du besoin du traitement Tp(m) dans le créneau [Dp(m), Dc(n)], le reliquat Bp2(m) étant placé au début du créneau suivant [Dc(n), Dc(n+1)].

Dans le plan Sc, on place dans le créneau [Dc(n), Dc(n+1)] un intervalle de temps égal au reliquat Bp2(m) tel que placé dans le plan Sp, puis l'intervalle de temps de synchronisation t_{sync}. La somme de ces intervalles forme l'intervalle de remplissage t_{pad}. Le besoin Bc(n) est finalement placé après cet intervalle de remplissage t_{pad}. Sans cet intervalle de remplissage, le besoin Bp(n) pourrait être placé trop tôt dans le créneau, avant la fin du traitement Tp(m) sur l'autre unité d'exécution, situation qui n'arrive pas en utilisant une seule unité d'exécution avec un seul plan.

L'étape 5.1 est alors récrite comme suit :
5.1. Si le traitement courant ne possède pas de contrainte de postériorité, on place le besoin correspondant à ce traitement dans le créneau courant. [Si le créneau courant contient un intervalle de remplissage t_{pad}, celui-ci peut être utilisé pour placer le besoin.] Le besoin à placer peut être le reliquat d'un créneau précédent. Si le besoin ne peut pas être entièrement contenu dans le créneau courant, on complète le créneau courant avec une première partie du besoin, et le reliquat est conservé pour le créneau suivant.

Cette étape permet ainsi de mettre à profit les intervalles de remplissage insérés par les itérations de l'étape 5.2.1. Le cas échéant, un besoin peut être morcelé pour combler l'intervalle de remplissage et ensuite tout espace restant à la fin du créneau courant.

## Revendications

1. Procédé de construction d'un plan de séquencement de plusieurs tâches (Tₚ, T_{c}) à exécuter sur un système temps réel, mis en oeuvre hors-ligne par un outil de développement à partir d'une définition formalisée des tâches selon laquelle chaque tâche (Tₚ, T_{c}) est décomposée en une séquence de trames, où chaque trame est associée à un traitement élémentaire (Tp(m)) ayant un besoin d'exécution (Bp(m)), et définit une date de début (Dp(m)) à partir duquel le traitement peut démarrer et une date de fin (Dp(m+1)), ou échéance, à laquelle le traitement doit être terminé, procédé **caractérisé en ce qu'**il comprend les étapes suivantes :
associer des contraintes d'ordre respectives (C) à des couples de traitements (Tp(m), Tc(n)) ;
projeter les dates sur une échelle de temps (S) associée à une unité d'exécution du système temps-réel, formant ainsi une suite de créneaux temporels ;
parcourir séquentiellement les créneaux temporels de la suite ;
identifier des traitements éligibles dans un créneau temporel courant, un traitement étant éligible s'il respecte les deux critères suivants :
il est exécutable dans le créneau courant, et
s'il possède une contrainte d'ordre, le traitement référencé par la contrainte d'ordre est également exécutable dans le créneau courant, ou l'échéance du traitement référencé est située dans un créneau précédent ;
trier les traitements éligibles dans une liste par ordre d'échéances croissantes ;
modifier la liste pour réordonner les traitements selon leurs contraintes d'ordre ;
répartir les besoins d'exécution des traitements éligibles dans le créneau temporel courant dans l'ordre de la liste pour construire le plan de séquencement ; et
produire le plan de séquencement dans un format apte à configurer le système temps-réel.

2. Procédé selon la revendication 1, comprenant une étape initiale de suppression des contraintes d'ordre dans chaque couple qui est formé de deux traitements dont les trames ne se chevauchent pas.

3. Procédé selon la revendication 1, dans lequel l'étape de modification de la liste et l'étape de répartition des besoins comprennent les étapes suivantes :
parcourir séquentiellement les traitements de la liste ;
si le traitement courant de la liste possède une contrainte d'ordre référençant un traitement placé après le traitement courant dans la liste, modifier la liste en plaçant le traitement référencé devant le traitement courant ;
réitérer le parcours de la liste en démarrant à la position du traitement référencé repositionné ;
sinon placer le besoin du traitement courant dans le créneau courant.

4. Procédé selon la revendication 2, dans lequel l'étape de placement du besoin comprend les étapes suivantes :
placer l'intégralité du besoin dans le créneau courant si le créneau dispose de suffisamment de place pour le contenir ;
sinon combler le créneau courant avec une première partie du besoin et reporter le placement du reliquat à un créneau ultérieur.

5. Procédé selon la revendication 3, dans lequel le système temps-réel comprend plusieurs unités d'exécution, le procédé comprenant en outre les étapes suivantes :
associer à chaque unité d'exécution une copie (Sp, Sc) de la suite de créneaux temporels pour former un plan de séquencement pour chaque unité d'exécution ;
allouer les unités d'exécution aux tâches (Tp, Tc) de manière que des traitements liés par des contraintes d'ordre soient exécutés sur des unités d'exécution différentes ;
à l'étape de placement du besoin :
placer le besoin (Bp2(m)) dans le créneau courant de la suite (Sp) associée au traitement courant, et
placer dans le créneau courant de la suite (Sc) associée au traitement référencé un intervalle de remplissage (tpad) correspondant au besoin placé augmenté d'un temps de synchronisation (tsync) tenant compte de délais survenant dans la communication d'une donnée entre deux unités d'exécution et d'un décalage entre les horloges des deux unités d'exécution.

6. Procédé selon la revendication 5, dans lequel l'étape de placement du besoin dans le créneau courant comprend le placement du besoin dans tout intervalle de remplissage contenu dans le créneau courant.

7. Procédé d'exécution de tâches dans un système multitâche temps-réel, comprenant les étapes suivantes :
produire un plan de séquencement de plusieurs tâches selon la revendication 1 ;
configurer une unité d'exécution du système multitâche temps-réel pour appliquer le plan de séquencement dans une boucle ;
configurer une base de temps du système multitâche temps-réel pour cadencer les créneaux temporels du plan de séquencement ;
lancer séquentiellement les traitements éligibles de chaque créneau selon l'ordre de répartition des besoins d'exécution correspondants dans le créneau ; et
contrôler la conformité des durées d'exécution des traitements avec les besoins d'exécution correspondants.

## Patentansprüche

1. Verfahren zum Erstellen eines Plans zum Sequenzieren von mehreren Aufgaben (Tₚ, T_{c}), die auf einem Echtzeitsystem ausgeführt werden sollen, das durch ein Entwicklungswerkzeug aus einer formalisierten Definition der Aufgaben offline implementiert wird, wobei jede Aufgabe (Tₚ, T_{c}) in eine Sequenz von Rahmen zerlegt wird, wobei jeder Rahmen einer elementaren Verarbeitung (Tp(m)) zugeordnet ist, die eine Ausführungsanforderung (Bp(m)) besitzt und ein Anfangsdatum (Dp(m)), ab dem die Verarbeitung beginnen kann, und ein Enddatum (Dp(m+1)) oder eine Fälligkeit definiert, bei dem/der die Verarbeitung abgeschlossen sein muss, wobei das Verfahren **dadurch gekennzeichnet ist, dass** es die folgenden Schritte umfasst:
Zuordnen von jeweiligen Reihenfolgebeschränkungen (C) zu Paaren von Verarbeitungen (Tp(m), Tc(n));
Projizieren der Daten auf eine Zeitskala (S), die einer Ausführungseinheit des Echtzeitsystems zugeordnet ist, wodurch eine Folge von Zeitschlitzen ausgebildet wird;
aufeinanderfolgendes Durchlaufen der Zeitschlitze der Folge;
Identifizieren von zulässigen Verarbeitungen in einem aktuellen Zeitschlitz, wobei eine Verarbeitung zugelassen ist, wenn sie die folgenden zwei Kriterien erfüllt:
ist in dem aktuellen Schlitz ausführbar, und
wenn sie eine Reihenfolgebeschränkung aufweist, ist die Verarbeitung, auf die durch die Reihenfolgebeschränkung Bezug genommen wird, auch in dem aktuellen Schlitz ausführbar, oder die Fälligkeit der Verarbeitung, auf die Bezug genommen wird, ist innerhalb eines vorherigen Schlitzes gelegen;
Sortieren der zulässigen Verarbeitungen in einer Liste in der Reihenfolge von aufsteigenden Fälligkeiten;
Ändern der Liste zum Neuordnen der Verarbeitungen gemäß ihren Reihenfolgebeschränkungen;
Verteilen der Ausführungsanforderungen von zulässigen Verarbeitungen in dem aktuellen Zeitschlitz in der Reihenfolge der Liste zum Erstellen des Sequenzierungsplans; und
Erzeugen des Sequenzierungsplans in einem Format, das geeignet ist, um das Echtzeitsystem zu konfigurieren.

2. Verfahren nach Anspruch 1, umfassend einen anfänglichen Schritt eines Entfernens von Reihenfolgebeschränkungen in jedem Paar, das aus zwei Verarbeitungen ausgebildet ist, deren Rahmen sich nicht überlappen.

3. Verfahren nach Anspruch 1, wobei der Schritt des Änderns der Liste und der Schritt des Verteilens der Anforderungen die folgenden Schritte umfassen:
aufeinanderfolgendes Durchlaufen der Verarbeitungen der Liste;
wenn die aktuelle Verarbeitung der Liste eine Reihenfolgebeschränkung aufweist, die auf eine Verarbeitung Bezug nimmt, die nach der aktuellen Verarbeitung in der Liste platziert ist, Ändern der Liste, in dem die Verarbeitung, auf die Bezug genommen wird, vor der aktuellen Verarbeitung platziert wird;
Wiederholen des Durchlaufens der Liste, in dem an der Position der neu positionierten Verarbeitung gestartet wird, auf die Bezug genommen wird;
andernfalls Platzieren der Anforderung der aktuellen Verarbeitung in dem aktuellen Schlitz.

4. Verfahren nach Anspruch 2, wobei der Schritt des Platzierens der Anforderung die folgenden Schritte umfasst:
Platzieren der gesamten Anforderung in dem aktuellen Schlitz, wenn der Schlitz über genügend Platz verfügt, um sie zu enthalten;
andernfalls Auffüllen des aktuellen Schlitzes mit einem ersten Teil der Anforderung und Verschieben der Platzierung des Rests auf einen nachfolgenden Schlitz.

5. Verfahren nach Anspruch 3, wobei das Echtzeitsystem mehrere Ausführungseinheiten umfasst, das Verfahren umfassend ferner die folgenden Schritte:
Zuordnen einer Kopie (Sp, Sc) der Folge der Zeitschlitze zu jeder Ausführungseinheit zum Ausbilden eines Sequenzierungsplans für jede Ausführungseinheit;
Zuteilen der Ausführungseinheiten zu den Aufgaben (Tp, Tc), sodass Verarbeitungen, die durch Reihenfolgebeschränkungen gebunden sind, auf unterschiedlichen Ausführungseinheiten ausgeführt werden;
bei dem Schritt des Platzierens der Anforderung:
Platzieren der Anforderung (Bp2(m)) in dem aktuellen Schlitz der Folge (Sp), die der aktuellen Verarbeitung zugeordnet ist, und
Platzieren in dem aktuellen Schlitz der Folge (Sc), die der Verarbeitung zugeordnet ist, auf die Bezug genommen wird, eines Füllintervalls (tpad), das der platzierten Anforderung zuzüglich einer Synchronisierungszeit (tsync) entspricht, die Verzögerungen, die in der Kommunikation von Daten zwischen zwei Ausführungseinheiten plötzlich auftreten, und eine Zeitverzögerung zwischen den Uhren der zwei Ausführungseinheiten berücksichtigt.

6. Verfahren nach Anspruch 5, wobei der Schritt des Platzierens der Anforderung in dem aktuellen Schlitz das Platzieren der Anforderung in allen Füllintervallen umfasst, die in dem aktuellen Schlitz enthalten sind.

7. Verfahren zum Ausführen von Aufgaben in einem Multitasking-Echtzeitsystem, umfassend die folgenden Schritte:
Erzeugen eines Plans zum Sequenzieren von mehreren Aufgaben nach Anspruch 1;
Konfigurieren einer Ausführungseinheit des Multitasking-Echtzeitsystems zum Anwenden des Sequenzierungsplans in einer Schleife;
Konfigurieren einer Zeitbasis des Multitasking-Echtzeitsystems zum Takten der Zeitschlitze des Sequenzierungsplans;
sequenzielles Auslösen der zulässigen Verarbeitungen jedes Schlitzes gemäß der Verteilungsreihenfolge der Ausführungsanforderungen, die dem Schlitz entsprechen; und
Steuern der Übereinstimmung der Ausführungsdauern der Verarbeitungen mit den entsprechenden Ausführungsanforderungen.

## Claims

1. A method for constructing a sequencing plan for a plurality of tasks (Tp, Tc) to be executed on a real-time system implemented off-line by a developing tool from a formalised definition of the tasks according to which each task (Tp, Tc) is decomposed into a sequence of frames, wherein each frame is associated with an elementary process (Tp(m)) having an execution need (Bp(m)), and defines a start date (Dp(m)) from which the process can start and an end date (Dp(m+1)), or deadline, at which the process must complete;
associating respective order constraints (C) to process pairs (Tp(m), Tc(n));
projecting the dates on a time scale (S) associated with an execution unit of the real-time system, thus forming a sequence of time slots;
sequentially parsing the time slots of the sequence;
identifying eligible processes within a current time slot, a process being eligible if it meets the following two criteria:
it is executable in the current slot, and
if it has an order constraint, the process referenced by the order constraint is also executable in the current time slot, or the deadline of the referenced process is in a previous time slot;
sorting the eligible processes in a list by order of increasing deadlines;
modifying the list to reorder the processes according to their order constraints;
distributing the execution needs of the eligible processes in the current time slot in the order of the list to build the sequencing plan; and
producing the sequencing plan in a format suitable for configuring the real-time system.

2. The method according to claim 1, comprising an initial step of removing order constraints in each pair formed of two processes whose frames do not overlap.

3. The method according to claim 1, wherein the step of modifying the list and the step of distributing the execution needs comprise the following steps:
parsing the list of processes sequentially;
if the current process in the list has an order constraint referencing a process placed after the current process in the list, modifying the list by moving the referenced process before the current process;
resuming the list parsing starting at the position of the moved referenced process;
otherwise placing the execution need of the current process in the current slot.

4. The method according to claim 2, wherein the step of placing the execution need comprises the following steps:
placing the execution need fully in the current slot if the slot has enough space to accommodate it;
otherwise filling the current slot with a first part of the execution need and postponing the placement of the remainder of the execution need to a subsequent slot.

5. The method according to claim 3, wherein the real-time system comprises a plurality of execution units, the method further comprising the following steps:
associating with each execution unit a copy (Sp, Sc) of the sequence of time slots to form a sequencing plan for each execution unit;
allocating execution units to tasks (Tp, Tc) such that processes linked by order constraints are executed on different execution units;
in the execution need placement step:
placing the execution need (Bp2(m)) in the current slot of the plan (Sp) associated with the current process, and
placing in the current slot of the plan (Sc) associated with the referenced process a padding interval (t_{pad}) corresponding to the placed execution need increased by a synchronization time (t_{sync}) taking into account delays occurring in the communication of data between two execution units and an offset between the clocks of the two execution units.

6. The method according to claim 5, wherein the step of placing the execution need in the current slot comprises placing the execution need in any padding interval contained in the current slot.

7. A method of executing tasks in a real-time multitasking system, comprising the steps of:
producing a multi-task sequencing plan according to claim 1;
configuring a real-time multitasking system execution unit to apply the sequencing plan in a loop;
configuring a time base of the real-time multitasking system to clock the time slots of the sequencing plan;
sequentially running the eligible processes of each slot in the order in which the corresponding execution needs are distributed within the slot; and
checking that the process execution times conform with the corresponding execution needs.
